# EUROPEAN PATENT APPLICATION

(11) **EP 4 329 062 A1**
(43) Date of publication of application: **28.02.2024**
(21) Application number: 22864928.1
(22) Date of filing: 19.08.2022
(51) Int. Cl.: H01M 50/24, H01M 50/296, H01M 50/383, H01M 50/249, H01R 13/52, H01R 24/60

(54) **BATTERY MODULE THAT CAN SUPPRESS EMISSION OF GAS OR FLAME THROUGH CONNECTOR IN CASE OF INTERNAL IGNITION**

(30) Priority: 30.08.2021 KR 20210114981
(71) Applicant: LG Energy Solution, Ltd., Seoul 07335 (KR)
(72) Inventor: KIM, Kwang-Mo, Daejeon 34122 (KR); SEONG, Jun-Yeob, Daejeon 34122 (KR); JUNG, Hye-Mi, Daejeon 34122 (KR)
(74) Representative: Goddar, Heinz J.
(86) International application number: PCT/KR2022/012462
(87) International publication number: WO 2023/033424

(57) **Abstract**

A battery module according to the present disclosure may include battery cells; a module case accommodating the battery cells and having a connector mounting hole on one side; a flame retardant cover made of fire-resistant and insulating material, provided to shield the connector mounting hole; and a connector having a connector housing exposed to the outside through the connector mounting hole and isolated from the inside of the module case by the flame retardant cover, and connector pins extending into the module case through the flame retardant cover.

## Description

### TECHNICAL FIELD

The present application claims priority to Korean Patent Application No. 10-2021-0114981 filed on August 30, 2021 in the Republic of Korea, the disclosures of which are incorporated herein by reference.

The present disclosure relates to a battery module, and more specifically, to a battery module capable of effectively preventing the occurrence or spread of fire, and a battery pack including the same.

### BACKGROUND ART

Currently commercialized secondary batteries include nickel cadmium batteries, nickel hydride batteries, nickel zinc batteries, lithium secondary batteries, and the like. In particular, lithium secondary batteries are in the spotlight because they have almost no memory effect compared to nickel-based secondary batteries and thus have advantages of free charge/discharge, very low self-discharge rate, and high energy density.

The secondary battery may be used alone, but in general, a plurality of secondary batteries are electrically connected to each other in series and/or in parallel in many cases. In particular, a plurality of secondary batteries may be accommodated in one module case in a state of being electrically connected to each other to constitute one battery module. Also, the battery module may be used alone, or two or more may be electrically connected to each other in series and/or in parallel to constitute a higher level device such as a battery pack.

However, when a plurality of battery modules exist in a dense state in a narrow space as described above, they may be vulnerable to fire. For example, a thermal propagation may occur in any one battery module, and a situation in which a high-temperature gas is discharged from at least one battery cell (secondary battery) may occur. Moreover, high-temperature sparks may be ejected when the gas is discharged, and the sparks may include active materials deintercalated from electrodes inside the battery cell or molten aluminum particles. In addition, in some cases, a flame or the like may be generated in some battery cells. If the gas or flame is discharged to the outside of the battery module, it may be in contact with oxygen, thereby intensifying a fire.

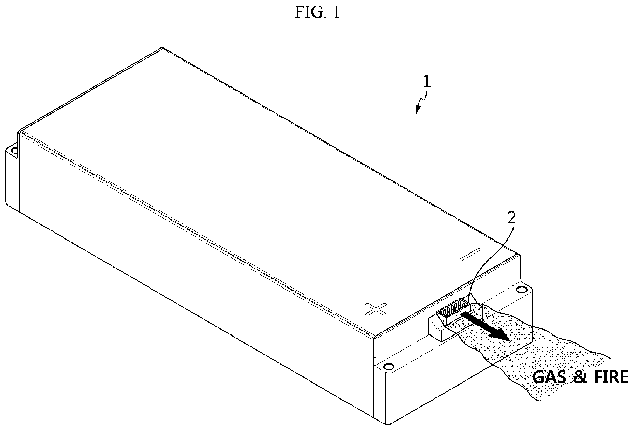

Meanwhile, in the conventional battery module 1, for example, as shown in FIG. 1, the male connector 2 is exposed to the outside of the module case for connection with the female connector (not shown). However, there is an assembly gap or a gap in the module case portion where the connector 2 is located. Moreover, since the connector is generally manufactured by injection molding made of a plastic material, it is vulnerable to heat and flame. For this reason, the connector melts when gas and flame are generated due to thermal propagation of the battery cell, and at this time, the gas and flame are easily emitted through the lost connector portion. The gas and flame emitted in this way accelerate heat transfer and damage to other battery modules adjacent to the corresponding battery module.

### DISCLOSURE

### Technical Problem

The present disclosure is designed to solve the problems of the related art, and therefore the present disclosure is directed to providing a battery module capable of suppressing gas and flame from being emitted to the outside through a connector made of an injection-molded material in a situation where the gas and flame are generated due to thermal propagation of battery cells inside the battery module.

However, technical problems to be solved by the present disclosure are not limited to the above-described problems, and other problems not mentioned herein may be clearly understood by those skilled in the art from the following description of the present disclosure.

### Technical Solution

A battery module according to an aspect of the present disclosure for achieving the above object may include battery cells; a module case accommodating the battery cells and having a connector mounting hole on one side; a flame retardant cover made of fire-resistant and insulating material, provided to shield the connector mounting hole; and a connector having a connector housing exposed to the outside through the connector mounting hole and isolated from the inside of the module case by the flame retardant cover, and connector pins extending into the module case through the flame retardant cover.

The connector housing may be configured such that a rear end portion facing the inside of the module case and a side portion are surrounded by the flame retardant cover.

The flame retardant cover may include a plate-shaped front shield portion facing the connector mounting hole inside the module case and covering the rear end portion of the connector housing; and a side shield portion provided along the edge of the front shield portion and surrounding the side portion of the connector housing.

The front shield portion may have pin holes through which the connector pins may pass.

The side shield portion may be fixedly coupled to the connector mounting hole.

The side shield portion may have a locking protrusion formed to protrude in a central direction of the front shield portion, and the connector mounting hole may have a fastening portion that surrounds the locking protrusion and is shape-fitted to the locking protrusion.

The module case may include a main housing having an opening on at least one side and accommodating the battery cells in a closed structure on four sides; and an end plate covering the opening of the main housing, wherein the connector mounting hole may be provided on the end plate.

The connector housing may include a first body extending toward the connector mounting hole and a second body extending in a direction crossing the first body.

According to another aspect of the present disclosure, there may be provided a battery pack including at least one battery module described above.

According to still another aspect of the present disclosure, there may be provided an electric vehicle including the battery pack.

### Advantageous Effects

According to the present disclosure, a battery module capable of suppressing gas and flame from being emitted to the outside through a connector made of an injection-molded material in a situation where the gas and flame are generated due to thermal propagation of battery cells inside the battery module may be provided.

In addition, the present disclosure may have various other effects, which will be described in each embodiment, or the corresponding description will be omitted for effects that can be easily inferred by those skilled in the art.

### DESCRIPTION OF DRAWINGS

FIG. 1 is a view schematically illustrating an example in which gas and flame generated inside a battery module according to the prior art are emitted through a connector.
FIG. 2 is a perspective view schematically illustrating a battery module according to an embodiment of the present disclosure.
FIG. 3 is a perspective view illustrating only a portion of the battery cells and the main housing of the battery module according to an embodiment of the present disclosure.
FIG. 4 is a perspective view additionally illustrating a bus bar frame and an end plate in the battery module configuration according to FIG. 3.
FIG. 5 is a view illustrating a state in which the bus bar frame of FIG. 4 is covered with an end plate.
FIG. 6 is a schematic exploded perspective view of a flame retardant cover and a connector according to an embodiment of the present disclosure.
FIG. 7 is a schematic cross-sectional view of a connector installation portion taken along line A-A' of FIG. 5.
FIG. 8 is a cross-sectional view, which is corresponding to FIG. 7, illustrating a modified example of a connector.
FIG. 9 is a view schematically illustrating a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

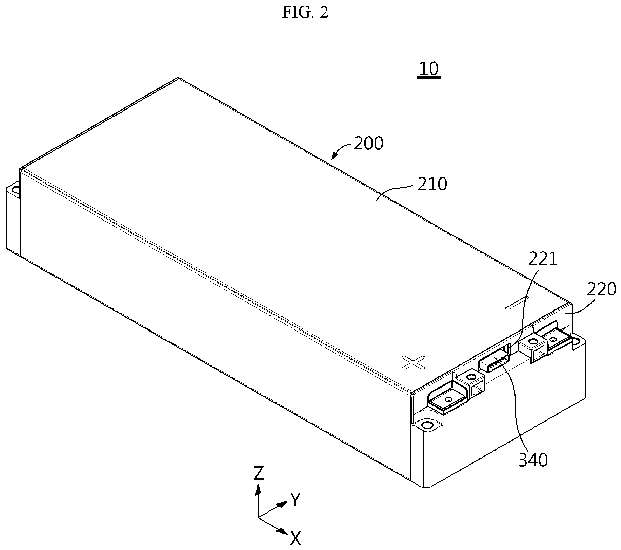

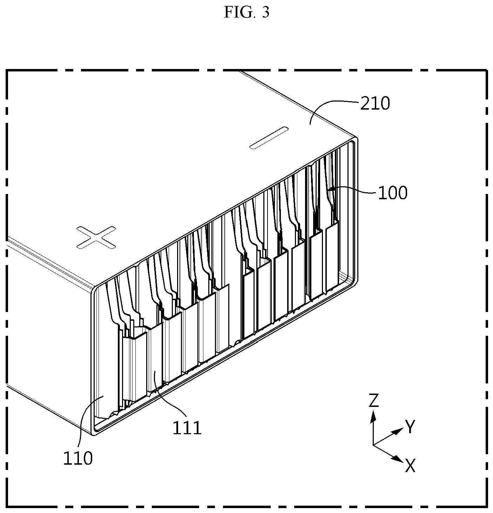

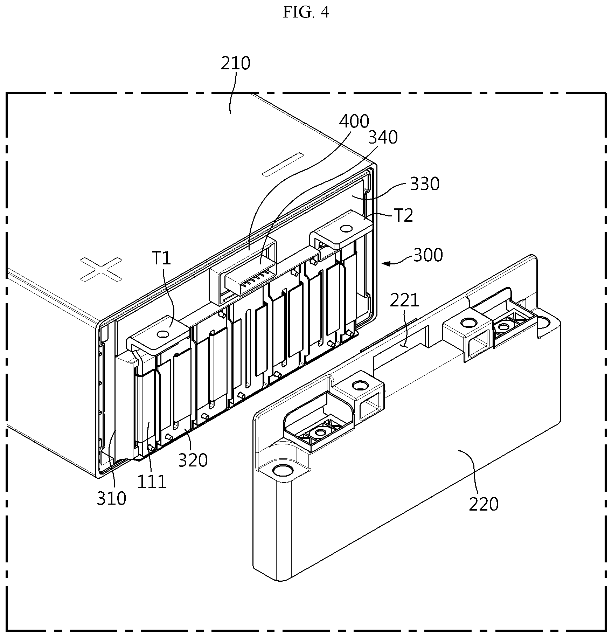

FIG. 2 is a perspective view schematically illustrating a battery module according to an embodiment of the present disclosure, FIG. 3 is a perspective view illustrating only a portion of the battery cells and the main housing of the battery module according to an embodiment of the present disclosure, and FIG. 4 is a perspective view additionally illustrating a bus bar frame and an end plate in the battery module configuration according to FIG. 3.

Referring to these drawings, the battery module 10 according to an embodiment of the present disclosure includes a cell assembly 100, a module case 200, a cell connection module 300, and a flame retardant cover 400.

The cell assembly 100 may include a plurality of battery cells 110. The battery cell 110 may include an electrode assembly, an electrolyte, and a battery case. The battery cell 110 may be divided into a cylindrical type, a prismatic type, a pouch type, and the like when classified externally, and the cell assembly 100 of the present embodiment is configured by employing the pouch-type battery cell 110.

The pouch-type battery cell 110 is a bidirectional battery cell 110 in which electrode leads 111 are positioned at both ends in the longitudinal direction (X-axis direction) of the battery cell 110. The plurality of pouch-type battery cells 110 are vertically erected (Z-axis direction) and stacked in close contact with each other in a horizontal direction (Y-axis direction), whereby the cell assembly 100 is configured. Also, as shown in FIG. 3, the cell assembly 100 may be accommodated in the module case 200 so that the electrode leads 111 of the plurality of pouch-type battery cells 110 face the front and rear of the module case 200, that is, the opening of the main housing 210.

The module case 200 includes a main housing 210 and an end plate 220.

The main housing 210 may be formed to have a predetermined length (along the X-axis direction), and may be provided in a substantially rectangular parallelepiped shape in which the openings are provided at the front and rear sides along the longitudinal direction. In addition, the main housing 210 may be formed of a metal material or a non-metal material having excellent mechanical rigidity to protect the cell assembly 100 from external physical and chemical elements.

In the main housing 210, when portions covering the upper and lower portions of the cell assembly 100 are referred to as an upper plate and a lower plate, and portions covering both side portions of the cell assembly 100 are referred to as a left side plate and a right side plate, the main housing 210 of the present embodiment is provided in the form of a mono frame in which the upper plate, the lower plate, the left side plate, and the right side plate are all integrated.

As an alternative to the mono frame type main housing 210, a main housing 210 manufactured by coupling the lower plate to a U-shaped frame in which the upper plate, the left side plate, and the right side plate are integrated by welding or the like may be employed.

The main housing 210 has a structure in which four sides are sealed. Thus, when gas or flame is generated in the cell assembly 100, the gas or flame may not be easily discharged to the outside through the four sides. However, although not shown, a gas discharge hole may be provided at a specific position of the main housing 210 for discharging the vent gas to the outside. In other words, when an event occurs, it is necessary to discharge the vent gas to the outside in order to prevent the battery module 10 from exploding due to an increase in internal pressure. In this case, a gas discharge hole may be applied to a specific position of the main housing 210 so that the vent gas may be discharged to the outside through a predetermined path.

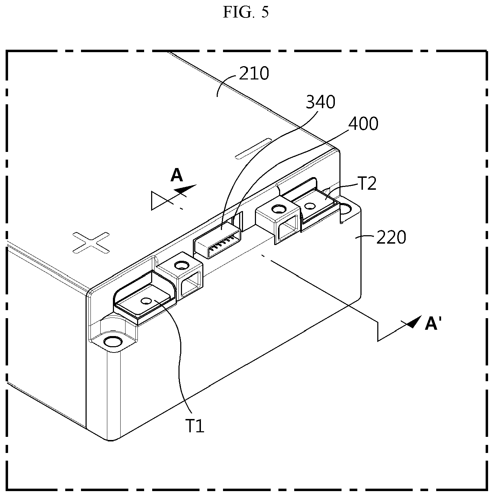

The end plate 220 is coupled to the main housing 210 and has a structure capable of covering the opening of the main housing 210 so that the cell connection modules 300 are not exposed to the outside except for a few parts. As shown in FIGS. 4 and 5, when the end plate 220 is coupled to the main housing 210, all parts except the positive electrode terminal T1, the negative electrode terminal T2, and the connector 340 may be shielded. Here, the positive electrode terminal T1 and the negative electrode terminal T2 function as terminals of the battery module 10, and the connector 340 is exposed to the outside of the module case 200 for connection with other connectors (not shown).

In particular, in order to expose the connector 340 to the outside, the end plate 220 includes a connector mounting hole 221. Here, the connector mounting hole 221 refers to a region formed through the end plate 220 to allow the connector 340 to pass therethrough.

Referring to FIG. 4 again, the cell connection module 300 includes a bus bar frame 310 made of an insulating material, a plurality of bus bars 320 made of a conductive material, a circuit board 330, and a connector 340.

The bus bar frame 310 is a plate-shaped structure for supporting the plurality of bus bars 320 and the circuit board 330, and may be disposed in front of the electrode leads 111 of the battery cells 110. In addition, the bus bar frame 310 is configured to have slits at regular intervals along the left-right direction (Y-axis direction) and to withdraw the electrode leads 111 of the battery cells 110 in the front-rear direction (X-axis direction) through the slits. The electrode leads 111 of the battery cells 110 drawn out in this way may be attached to the corresponding bus bars 320 by welding, for example, as shown in FIG. 4.

The circuit board 330 may be fixedly installed in an upper end region of the bus bar frame 310. Although not shown in detail for convenience of drawing, the circuit board 330 may be electrically connected to each bus bar 320 for voltage sensing of the battery cells 110 and may include a temperature sensor (not shown) extending to be disposed in the inner direction of the module case 200. The circuit board 330 may be implemented as a rigid printed circuit board or a flat flexible printed circuit board (FPCB).

The connector 340 is a means for transmitting the voltage and temperature of the battery cells 110 to an external device such as a battery management system (BMS), and may be fixedly installed on the circuit board 330. Also, as described above, when the end plate 220 is coupled to the main housing 210, the connector 340 may be exposed to the outside through the connector mounting hole 221 of the end plate 220. In particular, in this case, the connector 340 may be configured such that the connector housing 341 is isolated from the inside of the module case 200 by the flame retardant cover 400 and the connector pins 342 pass through the flame retardant cover 400 to extend into the module case 200 and be connected to the circuit board 330.

According to the above configuration, the connector 340 may be protected by the flame retardant cover 400 from gas and flame when the battery module 10 is internally ignited.

Hereinafter, the configuration, application structure, and function of the flame retardant cover 400 will be described in more detail.

The flame retardant cover 400 has fire resistance sufficient to withstand high-temperature gas and flame, and may be made of an insulating material, for example, ceramic so as not to affect signal transmission.

In addition, the flame retardant cover 400 may be formed in a structure surrounding the rear end (where the connector pin 342 is drawn out) and the side portion of the connector housing 341 to protect the connector 340 from gas and flame. Here, the rear end of the connector housing 341 is a portion facing the inside of the module case 200 and refers to a side closer to the circuit board 330.

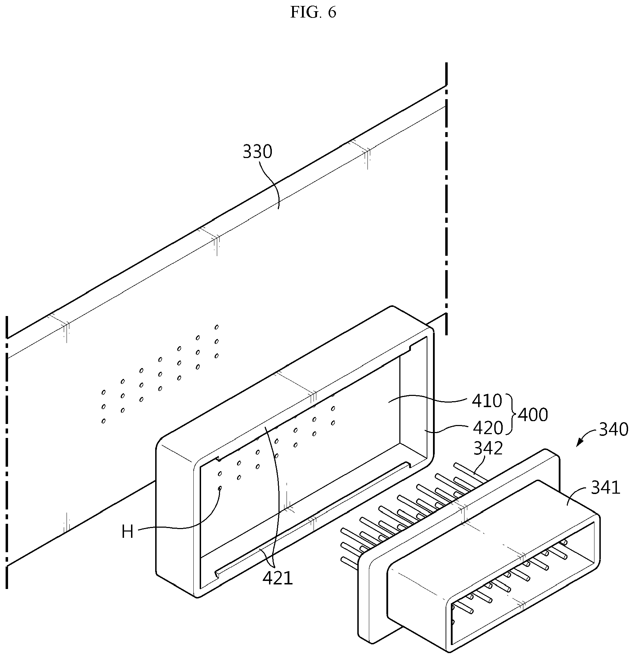

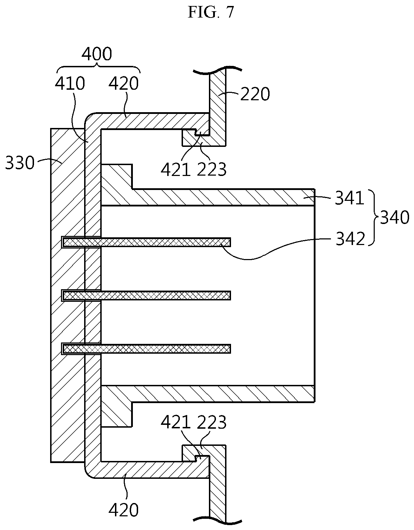

More specifically, referring to FIGS. 6 and 7, the flame retardant cover 400 includes a front shield portion 410 covering the rear end of the connector housing 341 and a side shield portion 420 surrounding the side portion of the connector housing 341.

In addition, the front shield portion 410 includes pin holes H through which connector pins 342 may pass. The connector pins 342 may be drawn out to the rear of the front shield portion 410 through the pin holes H so as to be connected to the circuit board 330. In this case, the rear end of the connector housing 341 may be configured to adhere to the front surface of the front shield portion 410. That is, the rear end of the connector housing 341 and the front surface of the front shield 410 may be fixed to each other by an adhesive when the connector pins 342 are completely inserted into the pin holes H.

The side shield portion 420 may be configured to surround the side portion of the connector housing 341 and be fixedly coupled to one side of the module case 200. In other words, the side shield portion 420 may be configured to be fixedly coupled to the connector mounting hole 221 of the end plate 220. To this end, the side shield portion 420 includes a locking protrusion 421, and the connector mounting hole 221 includes a fastening portion 223 that is shape-fitted to the locking protrusion 421 in a shape surrounding the locking protrusion 421.

For example, as shown in FIG. 7, the locking protrusion 421 of the side shield portion 420 and the fastening portion 223 of the connector mounting hole 221 are locked and coupled to each other, so that the flame retardant cover 400 and the end plate 220 are connected. According to this, the flame retardant cover 400 may not move in an inward direction of the module case 200 even if an external force is applied from the outside to the inside of the battery module 10, and conversely, it may not move to the outside of the module case 200 even if the wind pressure of the gas acts in an outward direction of the battery module 10. In addition, the rear end of the connector housing 341 is adhesively fixed to the flame retardant cover 400, and thus the structural and electrical stability of the connector 340 may be maintained even when an impact is applied during connecting or disconnecting another external connector 340.

As described above, it is configured such that the portion formed through the end plate 220 to expose the connector 340 to the outside, that is, the connector mounting hole 221 region, is shielded by the flame retardant cover 400, but the connector housing 341 is isolated from the internal space of the module case 200, and only the connector pin 342 is connected to the circuit board 330 inside the module case 200. Thus, when gas and flame are generated due to thermal propagation of the battery cells 110 inside the battery module 10, the connector 340 may be protected from the gas and flame.

Therefore, in accordance with the configuration and action of the flame retardant cover 400 according to the present embodiment, by preventing gas and flame from being emitted to the outside through the connector 340 and the periphery of the connector 340 when the battery module 10 is internally ignited, it is possible to achieve the object of the present disclosure to reduce thermal damage to other battery modules or other external devices adjacent to the corresponding battery module 10.

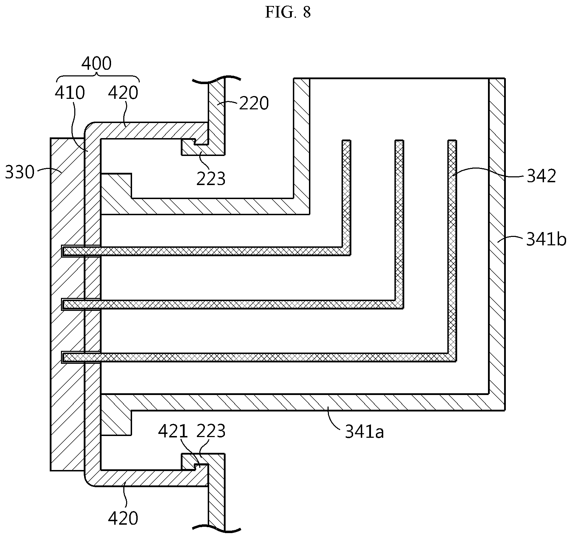

FIG. 8 is a cross-sectional view, which is corresponding to FIG. 7, illustrating a modified example of a connector.

A modified example of the present disclosure will be described with reference to FIG. 8. The same reference numbers represent the same members, and the repeated description of the same members will be omitted, but differences from the above-described embodiments will be mainly described.

When compared with the above-described embodiment, the modified example of the present disclosure is different in the configuration of the connector housing 341 and the connector pin 342, and the other configurations are substantially the same. The connector 340 of the above-described embodiment is configured to be connected in a horizontal direction (X-axis direction) when connected to another external connector (not shown), whereas in this modified example, the connector 340 is configured to be connected in a vertical direction when connected to another external connector (not shown).

To this end, as shown in FIG. 8, the connector housing 341 includes a first body 341a extending toward the connector mounting hole 221, and a second body 341b extending in a direction crossing the first body 341a. In addition, the connector pins 342 may be configured to extend in a bent shape as shown in the drawing.

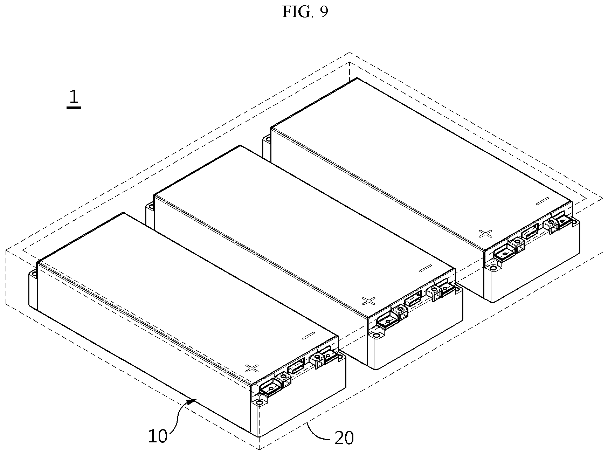

Meanwhile, the battery pack 1 according to the present disclosure may include a plurality of battery modules 10 according to the present disclosure described above, as shown in FIG. 9. In addition, the battery pack 1 according to the present disclosure, although not shown for convenience of drawing, may further include other various components besides the battery module 10, such as an inter-bus bar 320 for connecting the BMS or the battery modules 10 to each other, a pack case 20, a relay, a current sensor, and the like, which are components of the battery pack 1 known at the time of filing of the present disclosure.

Also, the battery pack according to the present disclosure may be applied to a vehicle such as an electric vehicle or a hybrid vehicle. That is, the vehicle according to the present disclosure may include the battery module 10 according to the present disclosure described above.

In addition, the battery module 10 according to the present disclosure may be applied to an energy storage system (ESS). In particular, in order to have a large energy capacity, the energy storage system may include a plurality of battery modules 10 according to the present disclosure in a form electrically connected to each other. Alternatively, in the battery module 10 according to the present disclosure, a plurality constitutes one battery pack 1, and the energy storage system may be configured in a form where a plurality of such battery packs are included. The energy storage system may further include various other components of the energy storage system known at the time of filing of the present disclosure. The energy storage system may be used in various places or devices, such as a smart grid system or an electric charging station.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure and the equivalent scope of the appended claims.

Meanwhile, the terms indicating directions as used herein such as upper, lower, left, and right are used for convenience of description only, and it is obvious to those skilled in the art that the terms may change depending on the position of the stated element or an observer.

## Claims

1. A battery module comprising:
battery cells;
a module case accommodating the battery cells and having a connector mounting hole on one side;
a flame retardant cover made of fire-resistant and insulating material, provided to shield the connector mounting hole; and
a connector having a connector housing exposed to the outside through the connector mounting hole and isolated from the inside of the module case by the flame retardant cover, and connector pins extending into the module case through the flame retardant cover.

2. The battery module according to claim 1,
wherein the connector housing is configured such that a rear end portion facing the inside of the module case and a side portion are surrounded by the flame retardant cover.

3. The battery module according to claim 2,
wherein the flame retardant cover comprises:
a plate-shaped front shield portion facing the connector mounting hole inside the module case and covering the rear end portion of the connector housing; and
a side shield portion provided along the edge of the front shield portion and surrounding the side portion of the connector housing.

4. The battery module according to claim 3,
wherein the front shield portion has pin holes through which the connector pins may pass.

5. The battery module according to claim 3,
wherein the side shield portion is fixedly coupled to the connector mounting hole.

6. The battery module according to claim 5,
wherein the side shield portion has a locking protrusion formed to protrude in a central direction of the front shield portion, and
the connector mounting hole has a fastening portion that surrounds the locking protrusion and is shape-fitted to the locking protrusion.

7. The battery module according to claim 1,
wherein the module case comprises:
a main housing having an opening on at least one side and accommodating the battery cells in a closed structure on four sides; and an end plate covering the opening of the main housing,
wherein the connector mounting hole is provided on the end plate.

8. The battery module according to claim 1,
wherein the connector housing comprises a first body extending toward the connector mounting hole and a second body extending in a direction crossing the first body.

9. A battery pack comprising at least one battery module according to any one of claims 1 to 8.

10. A vehicle comprising the battery pack according to claim 9.
